# EUROPEAN PATENT APPLICATION

(11) **EP 4 814 645 A1**
(43) Date of publication of application: **30.09.2026**
(21) Application number: 26161525.6
(22) Date of filing: 02.03.2026
(51) Int. Cl.: G05D 1/495, G05D 1/654

(54) **GANGED CONTROL SIGNALS FOR VTOL VEHICLES**

(30) Priority: 26.03.2025 US 202519091572
(71) Applicant: Lockheed Martin Corporation, Bethesda, Maryland 20817 (US)
(72) Inventor: Kubik, Stephen T., Newtown, CT (US); Seidenberg, Isabelle Marie, Philadelphia, PA (US); Wrona, Kevin, Milford, CT (US)
(74) Representative: Schmitt-Nilson Schraud Waibel Wohlfrom Patentanwälte Partnerschaft mbB

(57) **Abstract**

Ganged control signals for VTOL vehicles are provided. An aerial vehicle can include various airfoil assemblies. The aerial vehicle can include various actuators, each coupled with a corresponding one of the airfoil assemblies, configured to tilt a thrust generated by each of the plurality of airfoil assemblies away from a vertical axis of the aerial vehicle. The aerial vehicle can include one or more processors, coupled with memory, to determine a roll attitude of the aerial vehicle relative to a landing surface. The one or more processors can generate a ganged control signal, for each of the plurality of airfoil assemblies, to cause the corresponding actuator of the plurality of actuators to tilt the airfoil assemblies away from the vertical axis to reduce the roll attitude of the aerial vehicle.

## Description

This disclosure relates to aerial vehicles. For example, the aerial vehicles can include "tail-sitter" aircraft configured for vertical take-off or landing (VTOL) operations.

Rotary aircraft, such as helicopters, can conduct VTOL operations and slow speed loitering. However, their range may be reduced relative to fixed wing aircraft, based on fuel efficiency, aerodynamic drag, and other design considerations.

According to aspects of the present disclosure, a tail-sitter aircraft exhibits various benefits, relative to single main helicopters and fixed wing aircraft. For example, like a helicopter, the tail-sitter can use an airfoil in a rotor configuration to operate with relatively modest infrastructure, such as unimproved runways or helipads, to include ship-borne helipads. Once in flight, the aircraft can reorient forward to use the airfoil as a propeller, as in the case of a fixed wing aircraft, as may realize benefits related to range, payload, or fuel efficiency. For example, a body of the tail-sitter aircraft may be provided in a "flying wing" configuration which, when rotated generally perpendicular from a landed configuration, transitions into a flight configuration that having aerodynamic efficiency suitable for forward flight. Accordingly, references to a body of the aircraft may be referred to as either of a "body" or a "wing" without limiting effect. Moreover, the airfoil can be configured to pass air over the flying wing to enhance lift by accelerating airflow over the upper surface, taking advantage of the Coanda effect.

A tail-sitter aircraft can use multiple airfoils, such as one or more airfoils on each side of the body. An aircraft controller can use differential control of the airfoils to maintain a position or attitude of the aircraft in winds. For example, differential control can include differential speed control, as may cause the aircraft to tilt, making landing difficult. For example, where a tilt of an aircraft exceeds a ground strike angle, a wingtip may strike a landing surface prior to a ground contact point, such as a landing gear or skid. Even absent a ground-strike, maintaining a level attitude of the aircraft may be desirable to prevent overloading a first ground contact point in contact with the ground. For example, limiting an attitude of the aircraft, relative to a landing surface, to a suspension travel of any ground contact points can aid to evenly distribute landing forces among the ground contact points (and avoid tipping). This angle may be referred to as a ground contact angle of the ground contact points.

Moreover, since tail sitter aircraft may be used in shipboard environments, references to winds can refer to wind speed relative to a moving landing zone, which may be present even when little wind is present, and may further be additive to any environmental windspeeds. The aircraft may align a lateral axis of a "wing" with the wind to avoid tipping, but this can concentrate the effect of the wind along the wing. Maintaining the position of the aircraft over the moving ship (or a stationary landing zone in some wind conditions) can cause the aircraft to tilt so as to exceed a grounds strike angle, or at least a ground contact angle.

The application of a ganged lateral cyclic control for multiple airfoils can level the aircraft parallel to a landing surface without a corresponding attitude change. This can further be used to avoid tipping in high wind environments, including gusts (e.g., during flight or after landing). For example, at least a portion of cyclic control can be apportioned to the ganged lateral control to compensate for a wind condition without adjusting the aircraft attitude.

An aspect of the present disclosure can relate to an aerial vehicle. The aerial vehicle can include a plurality of airfoil assemblies. The aerial vehicle can include a plurality of actuators, each coupled with a corresponding one of the plurality of airfoil assemblies, configured to tilt a thrust generated by each of the plurality of airfoil assemblies away from a vertical axis of the aerial vehicle. The aerial vehicle can include one or more processors, coupled with memory, to determine a roll attitude of the aerial vehicle relative to a landing surface. The one or more processors can generate a ganged control signal, for each of the plurality of airfoil assemblies, to cause the corresponding actuator of the plurality of actuators to tilt the airfoil assemblies away from the vertical axis to reduce the roll attitude of the aerial vehicle.

In some implementations, the plurality of airfoil assemblies are each located along a lateral axis of the aerial vehicle. The aerial vehicle can extend a lateral distance along the lateral axis, greater than a vertical distance along the vertical axis. In some implementations, the techniques described herein relate to an aerial vehicle having a controller configured to adjust an orientation of the aerial vehicle to align the lateral axis of a body of the aerial vehicle with a direction of wind, relative to the landing surface. In some implementations, the controller is configured to detect a proximity between the aerial vehicle and the landing surface. The controller can transition from a first mode of operation to a second mode of operation based on the detected proximity, wherein in the second mode of operation, a greater portion of a range of travel of the plurality of actuators is apportioned to the ganged control signal, than in the first mode of operation.

In some implementations, the controller is configured to determine a relative motion between an environment and the landing surface. The controller can reduce the roll attitude of the aerial vehicle as referenced to the relative motion of the landing surface. In some implementations, a body of the aerial vehicle extends laterally beyond ground contact points. The controller can limit a lateral displacement of the body to less than a ground strike angle of the body and a ground contact angle for the ground contact points. In some implementations, the plurality of airfoil assemblies can consist of and a frost and second airfoil assembly. The first airfoil assembly cam ne disposed laterally beyond a first ground contact point in a first lateral direction, relative to a lateral center of the aerial vehicle. The second airfoil assembly can be disposed laterally beyond a second ground contact point in a second lateral direction opposite from the first lateral direction, relative to the lateral center of the aerial vehicle.

In some implementations, the controller is configured to limit the ganged control signal to a maximum tilt which less than a maximum tilt of the plurality of actuators. The controller can provide an un-ganged control signal, for a first of the plurality of airfoil assemblies, to cause the corresponding actuator to tilt the first of the plurality of airfoil assemblies. The controller can actuate the actuator corresponding to the first of the plurality of airfoil assemblies according to an aggregation of the ganged control signal and the un-ganged control signal.

In some aspects, the techniques described herein relate to a method, including: determining, by a controller, a roll attitude of an aerial vehicle relative to a landing surface; and generating, by the controller, a ganged control signal for a plurality of actuators, each coupled with a corresponding one of a plurality of airfoil assemblies of the aerial vehicle, to cause the airfoil assemblies to generate thrust tilted away from a vertical axis of the aerial vehicle and reduce the roll attitude of the aerial vehicle.

An aspect of the present disclosure can relate to a method. The method can include adjusting, by the controller, an orientation of the aerial vehicle to align a lateral axis of a body of the aerial vehicle with a direction of wind, relative to the landing surface. The plurality of airfoil assemblies can be each located along the lateral axis of the aerial vehicle. The aerial vehicle can extend a lateral distance along the lateral axis, greater than a lateral distance along a lateral axis and a vertical distance along the vertical axis.

In some implementations, the method includes detecting, by the controller, a proximity between the aerial vehicle and the landing surface. The method can include transitioning, by the controller, between a first mode of operation and a second mode of operation based on the detected proximity. In the second mode of operation, a greater portion of a range of travel for the plurality of actuators coupled with the plurality of airfoil assemblies can be apportioned to the ganged control signal, than in the first mode of operation. In some implementations, the method includes determining, by the controller, a relative motion between an environment and the landing surface. The method can include reducing, by the controller, the roll attitude of the aerial vehicle as referenced to the landing surface using environmental sensors. In some implementations, a body of the aerial vehicle includes a flying wing extending laterally beyond landing gear. The controller can be configured to limit a lateral displacement of the body to less than a ground strike angle for wingtips of the flying wing and a ground contact angle for the landing gear.

In some implementations, the plurality of airfoil assemblies consist of a first airfoil assembly and second airfoil assembly. The first airfoil assembly can be disposed laterally beyond a first ground contact point in a first lateral direction, relative to a lateral center of the aerial vehicle. The second airfoil assembly can be disposed laterally beyond a second ground contact point in a second lateral direction opposite from the first lateral direction, relative to the lateral center of the aerial vehicle. In some implementations, the method includes limiting, by the controller, the ganged control signal to a maximum tilt which less than a maximum tilt of the plurality of airfoil assemblies. The method can include providing, by the controller, an un-ganged control signal for a first of the plurality of airfoil assemblies to tilt the first of the plurality of airfoil assemblies. The method can include aggregating, by the controller, the ganged control signal and the un-ganged control signal to generate a first control signal for a first airfoil assembly and a second control signal, different from the first control signal, for the first airfoil assembly.

An aspect of the present disclosure can relate to a system. The system includes a controller. The controller can determine a roll attitude and position of an aerial vehicle relative to a landing surface. The controller can generate, based on the roll attitude and the position, a ganged control signal for each of a plurality of airfoil assemblies of the aerial vehicle disposed along a lateral axis of the aerial vehicle. The ganged control signal can cause the plurality of airfoil assemblies to generate thrust tilted away from a vertical axis of the aerial vehicle and reduce the roll attitude of the aerial vehicle.

In some implementations, the controller can generate un-ganged control signals for each of the plurality of airfoil assemblies. The un-ganged control signals can reposition the aerial vehicle relative to the landing surface; and adjust an attitude of the aerial vehicle relative to the landing surface. In some implementations, the repositioning of the aerial vehicle is configured to land the aerial vehicle on the landing surface. The adjusted attitude can align the lateral axis of the aerial vehicle with a windspeed direction. The controller can generate the ganged control signal responsive to a detected proximity to the landing surface and a comparison between a windspeed to a windspeed threshold. In some implementations, the system is configured to generate the ganged control signal while landed to prevent tipping of the aerial vehicle without taking off.

These and other aspects and implementations are discussed in detail below. The foregoing information and the following detailed description include illustrative examples of various aspects and implementations, and provide an overview or framework for understanding the nature and character of the claimed aspects and implementations. The drawings provide illustration and a further understanding of the various aspects and implementations, and are incorporated in and constitute a part of this specification. Aspects can be combined and it will be readily appreciated that features described in the context of one aspect of the invention can be combined with other aspects. Aspects can be implemented in any convenient form. For example, by appropriate computer programs, which can be carried on appropriate carrier media (computer readable media), which can be tangible carrier media (e.g. disks or other non-transitory storage media) or intangible carrier media (e.g. communication signals). Aspects can also be implemented using suitable apparatus, which can take the form of programmable computers running computer programs arranged to implement the aspects. As used in the specification and in the claims, the singular form of "a," "an," and "the" include plural referents unless the context clearly dictates otherwise.

### BRIEF DESCRIPTION OF THE DRAWINGS

The accompanying drawings are not intended to be drawn to scale. Like reference numbers and designations in the various drawings indicate like elements. For purposes of clarity, not every component can be labeled in every drawing. In the drawings:
FIG. 1 illustrates a block diagram of an example data processing system, in accordance with one or more implementations;
FIG. 2 illustrates an example of an aerial vehicle exhibiting yaw according to a first mode of operation, in accordance with one or more implementations;
FIG. 3 illustrates an example of the aerial vehicle of FIG. 2 exhibiting ganged cyclic control, in accordance with one or more implementations;
FIG. 4 illustrates a flow diagram for an inertial transformer, in accordance with one or more implementations;
FIG. 5 illustrates a graph of yaw tilt relative to tandem speed, in accordance with one or more implementations;
FIG. 6 illustrates a graph of power usage relative to tandem speed, in accordance with one or more implementations;
FIG. 7 illustrates a chart of tilt attitude relative to tandem speed, in accordance with one or more implementations;
FIG. 8 illustrates a flow diagram for a method for aerial vehicle control, in accordance with one or more implementations;
FIG. 9 illustrates a block diagram of an example computer system useful in implementing one or more components detailed herein.

In the following detailed description, reference is made to the accompanying drawings, which form a part hereof. In the drawings, similar symbols typically identify similar components, unless context indicates otherwise. The illustrative implementations described in the detailed description, drawings, and claims are not meant to be limiting. Other implementations can be utilized, and other changes can be made, without departing from the spirit or scope of the subject matter presented. It will be readily understood that the aspects of the present disclosure, as generally described herein, and illustrated in the figures, can be arranged, substituted, combined, and designed in a wide variety of different configurations, all of which are explicitly contemplated and make part of this disclosure.

The systems, apparatuses, and methods described herein can generate ganged control signals for multiple airfoils of an aerial vehicle. The ganged control signals can adjust a pitch of the multiple airfoils to provide a lateral force. The lateral force can counteract a windspeed around the aircraft, so as to orient the aircraft relative to a fixed or mobile location. For example, the fixed or mobile location can include a landing surface for the aerial vehicle, or an object of focus for a sensor of the aerial vehicle.

The ganged control signals can aid the aircraft during VTOL operations, such as taking off from, or landing on, the landing surface. Moreover, the ganged control signals can reduce tripping forces for stationary aircraft. For example, the aircraft bodies may be configured as a flying wing, and may experience tipping forces when stationary (on a fixed or stationary landing pad). Application of the ganged control signals can apply a counter-moment to the tipping moment from the wind, to avoid rotation as may reduce a risk of tipping. When landing or talking off, the aerial vehicle can be configured to align the length of the flying wing (e.g., a lateral axis of the aerial vehicle) with the wind to reduce these tipping forces.

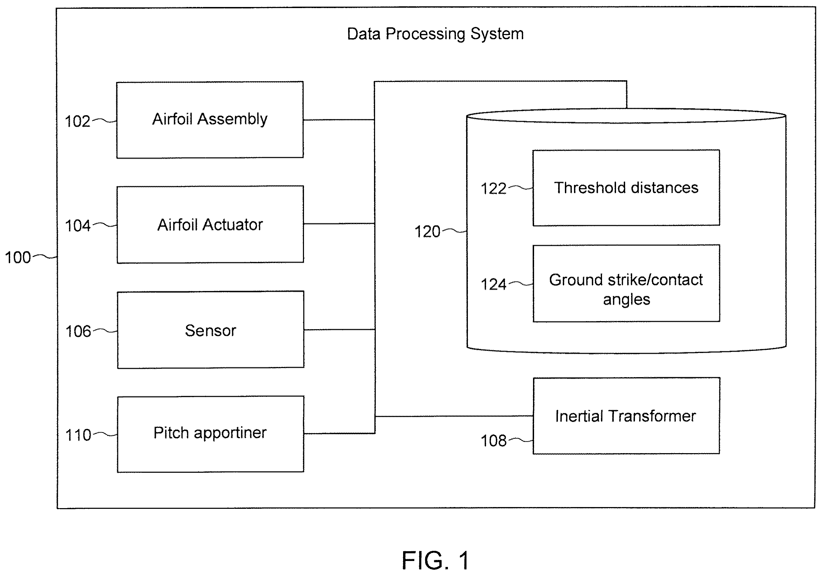

Referring now to FIG. 1, a block diagram of an example data processing system 100 is provided in accordance with one or more implementations. The data processing system 100 can include various airfoil assemblies 102. The data processing system 100 can include at least one airfoil actuator 104 coupled with each of the airfoil assemblies 102. The data processing system 100 can include at least one sensor 106 configured to detect indicia of a position, an attitude, or an environmental condition. The data processing system 100 can include at least one inertial transformer 108 configured to transform control inputs into coordinated outputs of various actuators of the various airfoil assemblies 102. The data processing system 100 (e.g., the inertial transformer 108) can include at least one pitch apportioner 110 configured to apportion a range of travel for pitch control between use for a ganged control signal and other control signals used to control the aerial vehicle.

The data processing system 100 can include at least one data repository 120. The depicted components should not be construed as limiting; for example, the data processing system 100 can include or interface with further instances of data processing systems to form collaborative swarms, ship-based control systems, or ground-based control systems.

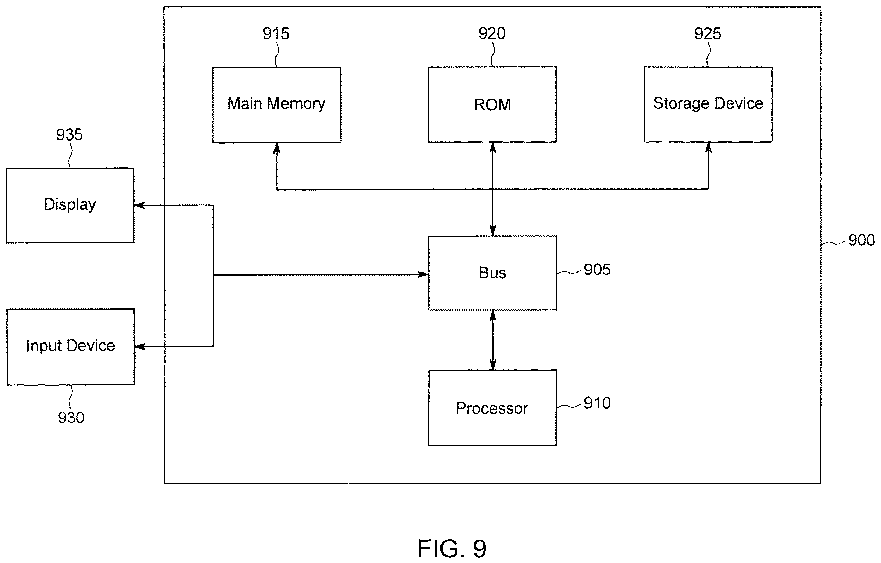

The airfoil assemblies 102, airfoil actuators 104, sensors 106, or inertial transformer 108, or pitch apportioner 110 can each include, interface with, or operate based on operations of a processing unit or other logic device such as programmable logic array engine, or module configured to communicate with the data repository 120 or database. The airfoil assemblies 102, airfoil actuators 104, sensors 106, or inertial transformer 108, or pitch apportioner 110 can be separate components, a single component, or part of the data processing system 100. The data processing system 100 can include hardware elements, such as one or more processors, logic devices, or circuits. For example, the data processing system 100 can include one or more components, structures or functionality of a computing device depicted in FIG. 9. Such components may sometimes be referred to as a controller, processor, or processing circuitry.

The data repository 120 can include one or more local or distributed databases, and can include a database management system. The data repository 120 can include computer data storage or memory and can store one or more threshold distances 122 or contact angles 124, such as ground strike angles.

The threshold distances 122 can refer to or include a distance between an aerial vehicle and a landing surface. The threshold distance 122 can make up at least a portion of criteria for operating a mode of the aerial vehicle. Other criteria, as may further be stored by the data repository 120, can include windspeeds, payloads, assigned missions, proximity to other aircraft, and so forth.

The contact angles 124 can refer to or include an angle for an aerial vehicle relative to a landing surface. For example, the contact angle can include a ground strike angle, tip-over angle, ground contact angle, or so forth. The landing surface can include a stationary landing surface (e.g., helipad) or another landing surface, such as a ship deck, as can vary in inclination according to rolling seas.

The data processing system 100 can include at least one airfoil assembly 102 designed, constructed or operational to generate thrust. For example, the airfoil assembly 102 can generate lift when disposed in a vertical orientation, or forward thrust when disposed in a horizontal orientation. Moreover, the airfoil assembly 102 can be coupled with or otherwise disposed along a wing to generate lift based on prop wash generated by the airfoil assembly 102. The airfoil assembly 102 can couple with various airfoil actuators 104 configured to modulate the operation of the airfoil assembly 102.

The data processing system 100 can include at least one airfoil actuator 104 designed, constructed or operational to modulate the operation of the airfoil assembly 102. An airfoil actuator 104 can couple with each airfoil assembly 102 actuate the operation thereof. In some embodiments, multiple airfoil actuators 104 are coupled with each airfoil assembly 102 (e.g., for redundancy, load distribution, or staggered range of travel).

The airfoil actuator 104 can include a throttle actuator configured to adjust a power of an airfoil assembly 102, as may adjust a rotational speed of a rotor. The throttle may refer to a control signal configured to adjust a flow of air or fuel to a combustion engine, a current delivered to an electric motor, or other controls to modulate a speed or power of the airfoil assembly 102. The airfoil actuator 104 can include a pitch controller to adjust a pitch of airfoils of the airfoil assembly. For example, a lower pitch angle can provide more thrust at lower speeds, while a higher angle may be used while cruising to increase efficiency. Some implementations of pitch control can vary over the course of the rotation of airfoils (sometimes referred to as a cyclic control). By adjusting the pitch control of the airfoils along their rotation, the blade can be adjusted differently when forward and backwards, or side to side. Accordingly, the cyclic control can effectively tilt an airfoil assembly 102, although a rotor head of the airfoil assembly 102 may not, itself, tilt.

Some implementations of the present disclosure may omit some of the airfoil actuators 104 described herein. For example, a constant speed propeller implementation can omit a throttle; a fixed-pitch propeller can omit pitch control; a fixed rotor head implementations can omit a mass tilt mechanism. Moreover, some implementations can include further actuators. For example, in some implementations, the rotor head can itself tilt according to a mass tilt mechanism.

The data processing system 100 can include or interface with at least one sensor 106, constructed or operational to determine a position or attitude of an aerial vehicle. For example, the sensors 106 can include a proximity sensor 106 to detect a proximity to a landing surface, such as a stationary landing surface or a moving (e.g., shipborne) landing surface. The proximity sensor 106 can be implemented using a received signal strength indicator (RSSI) for a beacon or communications transceiver (e.g., of an open text or secure datalink). The proximity sensor 106 can be implemented using a global navigation satellite system (e.g., GLONASS or GPS), to compare a location to a location of the landing surface. The proximity sensor 106 can be implemented using a line-of-sight or time-of-flight sensor, such as an optical camera, radar, LiDAR, or so forth.

The sensors 106 can include a speed sensor, such as a groundspeed sensor or an airspeed sensor. In some implementations, the speed sensor can use a same sensor as a proximity sensor (e.g., a datalink or GPS sensor 106 to determine speed, or an optical position to determine an attitude relative to a landing surface). The sensors 106 can include sensors 106 to determine a windspeed, such as by comparing a groundspeed to an airspeed. The sensors can include an inertial measurement unit (IMU) to determine a position or speed, such as according to an implementation of dead reckoning. Further, an accelerometer of the IMU can be used to determine an attitude of the aerial vehicle.

The data processing system 100 can include at least one inertial transformer 108 designed, constructed or operational to generate an inertial transform. For example, the inertial transformer 108 can transform a vertical, lateral, or lateral groundspeed to an inertial frame of reference, such that the aerial vehicle is provided in a fixed reference frame. In some cases, this fixed reference frame is aligned to the earth's gravity. A further body frame may be provided, along with transformation matrices to transform velocities between inertial and body frames. Moreover, the inertial transform out output various controllers for pitch rates of airfoil assemblies 102, longitudinal velocity control, yaw rate control, and so forth. The various controllers can further correspond to control inputs such as an input for ganged longitudinal cyclic, ganged thrust, differential thrust, ganged lateral cyclic control, and so forth.

The data processing system 100 can include at least one pitch apportioner 110 designed, constructed or operational to apportion an available range of pitch to separate control signals of the inertial transformer 108. For example, for a pitch control of one hundred arbitrary units (e.g., minutes, degrees, radians, etc.), the pitch apportioner 110 can apportion a first portion of the pitch control (e.g., eighty arbitrary units) to ganged lateral control used to adjust an attitude of the aerial vehicle and a second portion (e.g., the remaining twenty arbitrary units to adjust a yaw of the aerial vehicle). The portion of pitch control can vary according to various control states. For example, the pitch apportioner 110 can increase a portion of pitch apportioned to ganged operation proximal to a landing surface or when hovering over a fixed target. Such apportionment can aid the aerial vehicle to maintain sensor coverage of sensors 106 having a field of view (FOV) as may move a target out of range according to an attitude of the aerial vehicle. The pitch apportioner 110 can decrease a portion of pitch apportioned to un-ganged operation distal to a landing zone or fixed target, as may increase a maneuverability of the aerial vehicle.

The apportioner 110 can limit a ganged control signal provided to multiple airfoil assemblies 102 to a maximum tilt which is less than a maximum tilt of the actuators. The apportioner 110 can provide an un-ganged control signal, for one of the airfoil assemblies, to cause the corresponding actuator to tilt the first of the plurality of airfoil assemblies. According to the apportionment, separate flight control loops, components, or systems can actuate the airfoil actuator 104 corresponding to the airfoil assembly 102 according to an aggregation of the ganged control signal and the un-ganged control signal. For example, the apportioner 110 can apportion 70% of the tilt range for the ganged control signal, and 30% of the tilt range for an un-ganged control signal. A flight system can use half of the apportioned range for the ganged control signal (35% of overall range) and 100% of the apportioned range for the un-ganged control signal (30% of overall range). The data processing system 100 can aggregate the ganged control signal and the un-ganged control signal to cause 65% tilt (30%+35%). This tilt can be achieved according to a cyclic pitch adjustment, or other techniques (e.g., a tilt-rotor system).

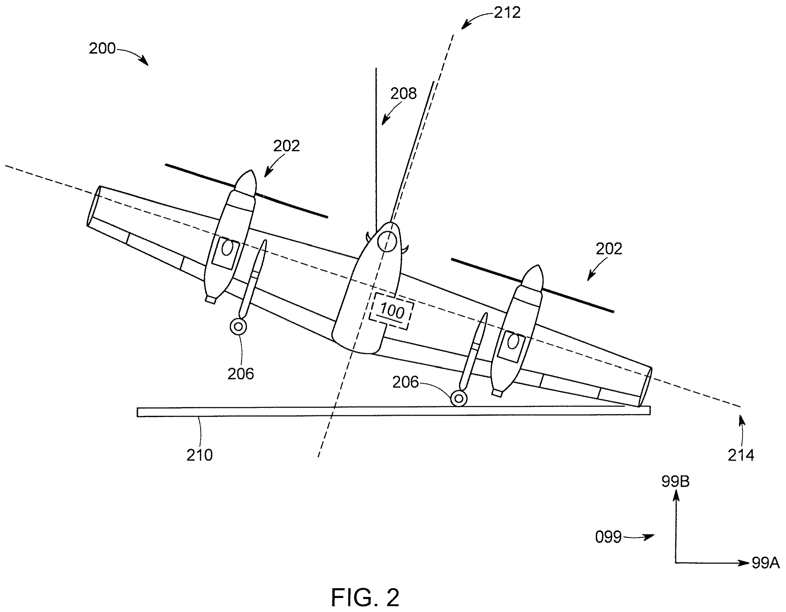

Referring now to FIG. 2, an example of an aerial vehicle 200 exhibiting yaw according to a first mode of operation is provided in accordance with one or more implementations. The illustrative example of the aerial vehicle 200 is depicted as a flying wing vehicle, having a streamlined tail-less design and a blown wing. Although such an implementation should not be construed as limiting, the depicted illustrative example can exhibit relaxed stability or dynamic instability, as may improve agility and responsiveness, relative to other approaches. Moreover, the aerial vehicle 200 can be configured as an autonomous vehicle having a vehicular control system configured to provide iterative control inputs to manage a position and attitude of the aerial vehicle 200. The omission of a pilot can further reduce vehicle complexity.

The aerial vehicle 200 includes airfoil assemblies 202. The airfoil assemblies 202 may be referred to as either of a rotor or a propeller (e.g., according to an operating mode). The airfoil assemblies 202 can be configured to generate thrust along a vertical axis 212 of the aerial vehicle 200. The airfoil actuator 104 can tilt the direction of the thrust away from the vertical axis 212. For example, the airfoil actuator 104 can adjust the pitch to tilt the thrust away from the vertical axis 212 so that a first component of the thrust propels the aerial vehicle 200 forward along the vertical axis 212 (e.g., *cos*(tilt)) and a second component of the thrust propels the vehicle 200 sideways along a lateral axis 214 perpendicular to the vertical axis 212 and another longitudinal axis perpendicular to the depicted lateral axis 214.

References to axes of the aerial vehicle 200, such as the vertical axis 212 and lateral axis 214 refer to the aerial vehicle 200 itself, and can vary from environmental axes. Environmental axes may refer to axes defined according to a reference of a fluid surrounding the aerial vehicle 200 (sometimes referred to as an aerodynamic axis), a landing surface, such as a mobile ship-borne landing surface, or another ground reference. For example, a depicted reference axis 99 is provided, having a first direction 99A and a second direction 99B perpendicular to the first direction 99A. According to such an orientation, the provided reference line 210 may refer to a longitudinal reference that an aerial vehicle position can be determined relative to (e.g., a horizontal surface of a helipad). Moreover, in some cases, the reference axis can be non-fixed, as in the case of a shipborne landing pad of a ship pitching or rolling in rough seas. Accordingly, at least three references may be used to describe a position of an aerial vehicle. For example, an aerial vehicle may be described relative to a body frame of the aerial vehicle, a reference frame of a moving landing surface, or a fixed reference frame (e.g., a GPS position).

For a rotor-like configuration, the body of the aerial vehicle 200 can be disposed in a top-down orientation while undergoing level flight. The first direction 99A and the second direction 99B may refer to lateral (e.g., X and Y) directions. According to a propeller-like configuration, the body of the aerial vehicle 200 can be disposed in a vertical orientation, such as while taking off or landing on a landing surface. According to such an orientation, the provided reference line 210 may be (or be parallel to) the landing surface. For example, the first direction 99A may refer to a lateral (e.g., X) direction and the second direction 99B may refer to a vertical (e.g., Z) direction.

Moreover, the aerial vehicle 200 can be configured to transition between various operating modes, wherein at least one of the operating modes is a vertical flight mode, like a helicopter (e.g., with the airfoil assemblies 202 oriented to generate more lift than forward thrust), and at least one other of the operating modes is a horizontal flight mode, like a fixed wing monoplane (e.g., with the airfoil assemblies 202 oriented to generate more forward thrust than lift). The aerial vehicle 200 can transition between various operating modes responsive to various conditions. For example, the data processing system 100 can transition from a vertical flight mode to a horizontal flight mode based on a distance from a takeoff or landing surface, a target for a sensor, or further conditions such as a distance to other aerial vehicles, wind speeds, temperatures, or other environmental conditions.

With continued reference to the FIG. 2, reference will be made to the aerial vehicle according to the rotor configuration, wherein the reference line 210 corresponds to a landing surface. As is depicted, the aerial vehicle 200 exhibits a roll attitude (e.g., including a roll angle 208) relative to the landing surface. The data processing system 100 can determine the roll attitude and generate a ganged control signal for each airfoil assembly 102 (depicted as two airfoil assemblies 102, though other aerial vehicle can include additional instances, such as three-airfoil assembly 102 configuration, a four-airfoil assembly 102 configuration, or so forth.) In some cases, the data processing system 100 can determine a relative motion between the environment and the landing surface. Such motion can refer to a windspeed or windspeed direction passing over the aerial vehicle 200, a motion of a shipborne landing surface, or so forth. For example, the landing surface can exhibit relative lateral translation or relative roll. The data processing system 100 can reduce a roll attitude of the vehicle as referenced to the relative motion of the landing surface. For example, the roll attitude can be adjusted to an adjusted attitude to match a roll attitude or a ship rolling in rough seas.

As depicted, the airfoil assemblies 102 are located along a lateral axis 214 of the aerial vehicle 200. The aerial vehicle 200 extends a lateral distance in the lateral direction, which is greater than a vertical distance in the vertical direction, or another lateral direction, perpendicular to the depicted lateral direction and vertical direction 212. As depicted, the airfoil assemblies 102 consist of one airfoil assembly disposed laterally beyond a first ground contact point 206 (e.g., in a first lateral direction, relative to a lateral center of the aerial vehicle) and another airfoil assembly 102 disposed laterally beyond a second ground contact point, in a second lateral direction opposite from the first lateral direction, relative to the lateral center of the aerial vehicle. As indicated above, some aerial vehicles can include additional, or differently disposed airfoil assemblies 102. For example, in some implementations, the landing gear or other contact points 206 can be disposed laterally outside of the airfoil assembly 102. Further, although a pair of ground contact points 206 are visible according to the present view, further ground contact points 206 may be included. For example, additional ground contact points 206 can be provided opposite from the visible contact points 206 (behind the depicted ground contact points 206) in a four-point configuration.

Where the body of the aerial vehicle extends laterally beyond ground contact points, some roll attitudes may result in striking a wingtip on the lading surface. For example, the depicted roll angle 208 corresponds to a ground strike angle of the body (e.g., wing) of the aerial vehicle 200, such that the wingtip intersects with the provided reference line 210 for the landing surface. The data processing system 100 can limit a lateral displacement of the body (e.g., using the ganged control signal) to less than the ground strike angle, or another ground contact angle. This, like other flight adjustments, may be performed as a part of a mode of operation transitioned into or out of based on a proximity between the aerial vehicle 200 and a landing surface. The modes of operation can apportion varying portions of a range of travel of an actuator to ganged and un-ganged control signals. For example, a greater portion of the range of travel can be apportioned to the ganged signal when proximal to the landing surface (to avoid exceeding a ground strike angle or ground contact angle). In some cases, further modes of operation can be included, such as a transition curve to smoothly apportion the range of travel according to the distance. Further, other aspects of flight may be adjusted when approaching the landing surface. For example, the data processing system 100 can adjust an orientation of the aerial vehicle to align the lateral axis of a body of the aerial vehicle with a direction of wind, relative to the landing surface. Such alignment can cause the wind to blow along the wing to reduce power used to maintain a static position, or repositioning to reduce a displacement caused during wind gusts.

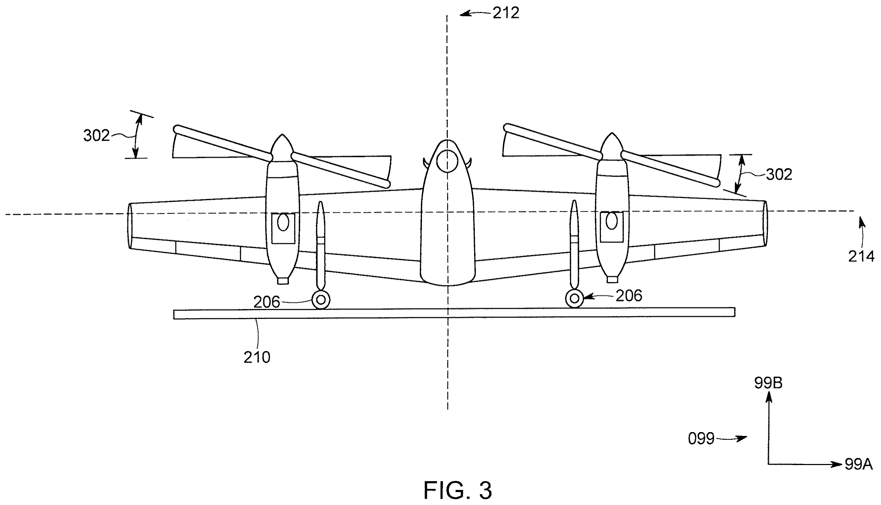

Referring now to FIG. 3, an example of the aerial vehicle 200 of FIG. 2 exhibiting ganged cyclic control is provided in accordance with one or more implementations. More particularly, the aerial vehicle 200 is depicted as having a lateral axis 214 parallel to the first direction 99A of the reference line 210 of the landing site. The vertical axis 212 of the vehicle 200 is depicted as parallel to the second direction 99B.

A tilt angle 302 of each of the airfoil assemblies 102 are depicted as equal, according to a ganged control signal. However, in some cases, the provided tilt angles 302 can vary from one another (e.g., according to a summation of the ganged control signal and an un-ganged control signal). The aerial vehicle 200 can operate in such a mode while landed (e.g., to prevent tipping of the aerial vehicle without taking off). The aerial vehicle 200 can operate in such a mode responsive to a detected proximity to a landing surface (e.g., for takeoff or landing), or in some other circumstances (e.g., to maintain an object of interest within a FOV for a sensor 106, in response to a comparison between a windspeed and a windspeed threshold).

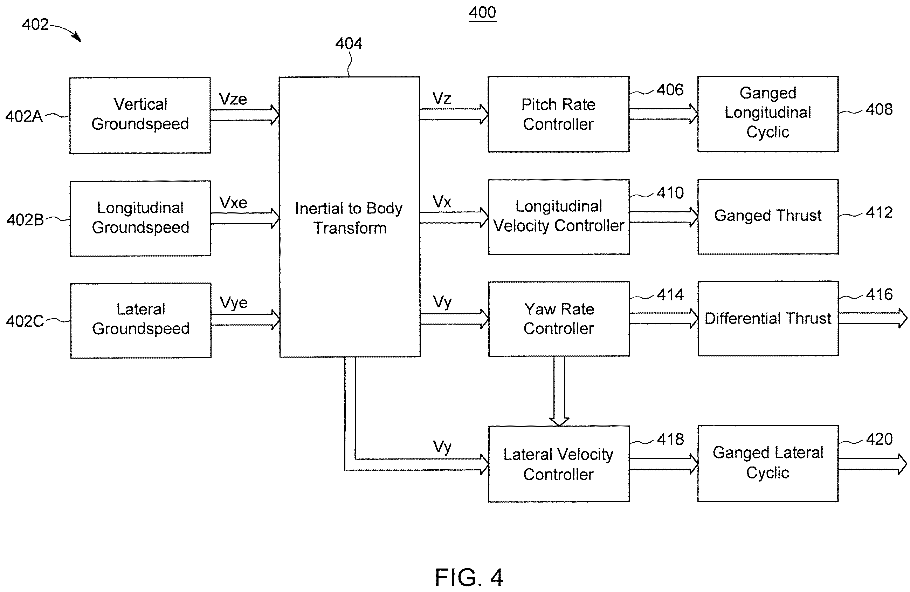

FIG. 4 illustrates a flow diagram 400 for an inertial transformer 108, in accordance with one or more implementations. The flow diagram 400 include groundspeed inputs 402, as are provided according to vertical 402A, longitudinal 402B, and lateral components 402C. The groundspeed inputs 402 can be determined based on, or substituted for, windspeed components, in some implementations. A body frame 404 may be provided, as may be referenced to a landing surface, the aerial vehicle 200 itself, or other body transforms realized from transformation matrices.

The inertial transformer 108 can generate outputs for yaw, roll, pitch, or other body-frame motion parameters used for flight control and stabilization. The inertial transformer 108 can include various control loops for flight control. For example, a pitch rate controller 406 can generate or adjust an output of a ganged longitudinal cyclic control output 408 and a longitudinal velocity controller 410 can generate or adjust an output of a ganged thrust 412. Yaw rate can be generated according to differential thrust and ganged cyclic outputs. More particularly, a yaw rate controller 414 can generate differential thrust outputs 416 for any of various airfoil assemblies 102 of an aerial vehicle 200. A lateral velocity controller 418 can generate a ganged lateral cyclic output 420 for the same airfoil assemblies 102 of the aerial vehicle 200.

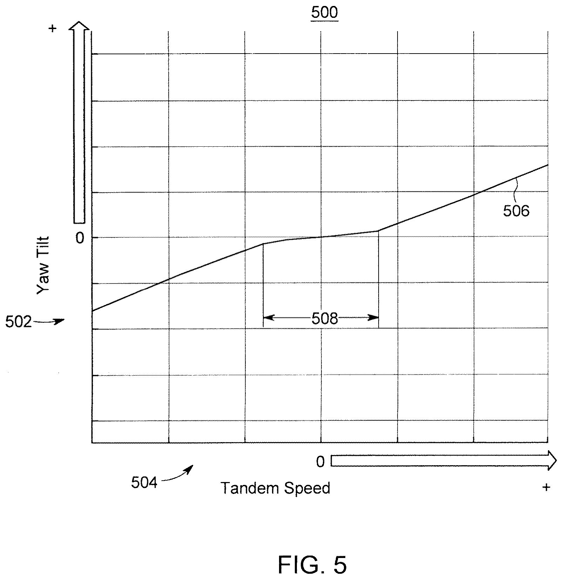

FIG. 5 illustrates a graph 500 of yaw tilt 502 relative to tandem speed 504, in accordance with one or more implementations. Various implementations can operate over various windspeed ranges, yaw tilt ranges, and so forth, as may vary according to wing geometry, realizable pitch angles, power sources, and so forth. An operational curve 506 depicts a relationship between the yaw tilt 502 and the tandem speed 504. Tandem speed 504 can be made up of any combination of motion of the aerial vehicle 200 or windspeed. Accordingly, the data processing system 100 can approach a landing site from a direction configured to reduce the sum of windspeed and motion of the aerial vehicle 200.

A central portion 508 of the operational curve 506 depict a zero yaw-tilt zone. According to such a region of operation, the aerial vehicle 200 can maintain an attitude without inducing yaw tilt. For example, a ganged control signal can be provided to each of the airfoil assemblies 102, as depicted in FIG. 3. Such an operating mode can be used to aid in landing, among other maneuvers. When operating beyond the central portion 508, the data processing system 100 can induce some yaw tilt which is less than a yaw tilt that would be realized according to a differential thrust applied to the respective airfoil assemblies 102.

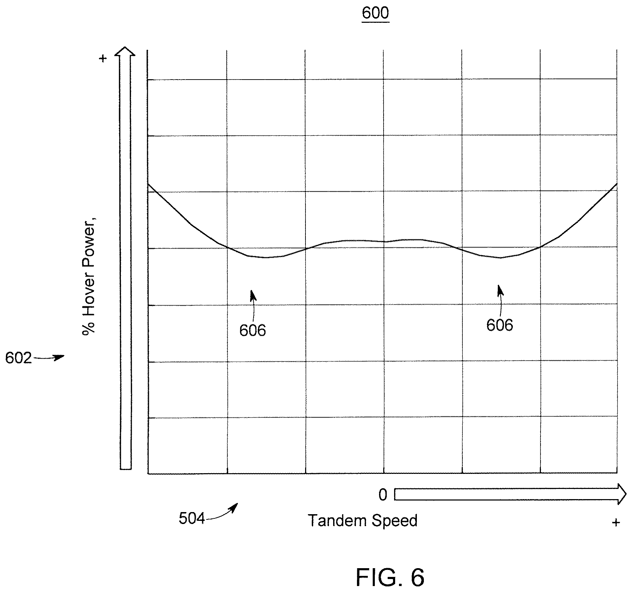

FIG. 6 illustrates a graph 600 of power usage relative to tandem speed, in accordance with one or more implementations. The power usage is provided according to a power usage axis 602 normalized to a hover power at zero speed. A tandem speed axis 504 is provided, as for FIG. 5. As is depicted, ganged lateral control can increase efficiency, relative to other approaches. This efficiency includes local minimums 606. However, at even higher windspeeds, yaw tilt efficiency can reduce. Moreover, vertical operation (using the airfoil as a propeller, as in the case of a fixed wing aircraft) can provide even greater efficiencies. Accordingly, it may be advantageous to adjust between various modes of operation according to a desired speed, efficiency, environmental conditions, and so forth.

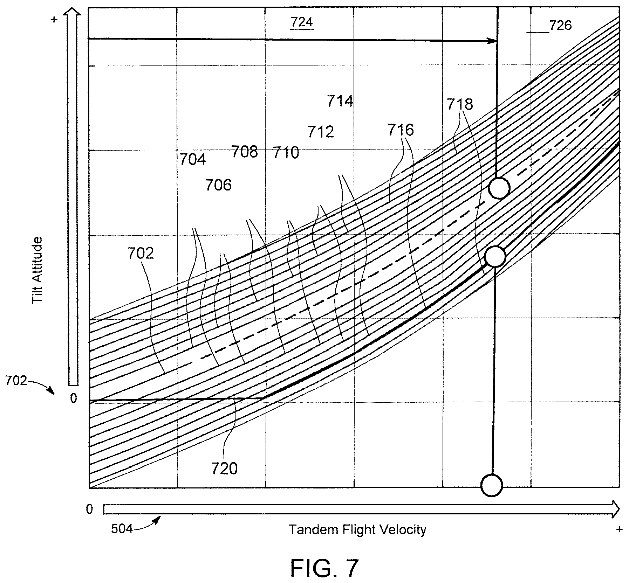

FIG. 7 illustrates a graph 700 of tilt attitude relative to tandem speed, in accordance with one or more implementations. More particularly, the graph 700 depicts a flight envelope for an aerial vehicle 200 along the graph 700. A first axis 702 depicts a tilt attitude and a second, tandem speed axis 504, depicts a tandem speed for the aerial vehicle. A centerline depicts a zero-tilt ganged control signal of the aerial vehicle 200. Various deviation lines provide offsets from the zero-tilt ganged control signal. For example, first deviation lines 704 depict offsets of +/- ten arbitrary units, second deviation lines 706 depict offsets of +/- twenty arbitrary units, third deviation lines 708 depict offsets of +/- thirty arbitrary units, and so on for fourth deviation lines 710, fifth deviation lines 712, sixth deviation lines 714, seventh deviation lines 716, and eighth deviation lines 718.

Corresponding to the central portion 508 of FIG. 5, a linear portion 720 of an operational envelope maintains zero tilt attitude of the aircraft by adjusting the tilt of the ganged control signal. More particularly, for speeds up to a positive or negative extreme of the central portion 508 of FIG. 5 (according to the non-limiting illustrative example depicted in FIG. 7), the ganged control signal can maintain the aerial vehicle 200 as having a neutral attitude with zero-yaw-tilt. At higher speeds, for a tilted portion 722 of the operational envelope, a non-zero tilt attitude of the aircraft is provided.

A first portion 724 of the tandem speed axis 504 can correspond to a windspeed limit. Such a tilt attitude may be configured to not exceed a ground strike angle, ground contact angle or so forth. The first portion 724 of the tandem speed axis 504 can include a portion to account for wind gusts. A second portion 726 of the tandem speed axis 504 can correspond to a restricted zone of operation, such that the data processing system 100 can adjust the mode of operation of the aerial vehicle 200.

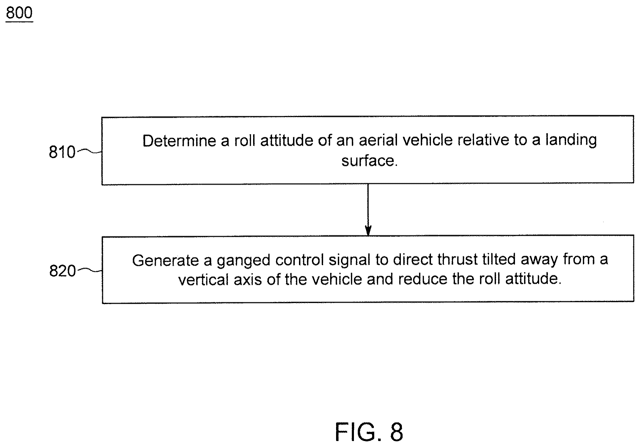

Referring to FIG. 8, a flow diagram for an example method 800 of aerial vehicle control is provided in accordance with one or more implementations. The method 800 can be executed, performed, or otherwise carried out by the data processing system, the aerial vehicle 200, the computer system 900 described hereinafter in conjunction with FIG. 9, or any other computing devices described herein. In brief overview, the method 800 can include determining a roll attitude of an aerial vehicle 200 relative to a landing surface at ACT 810. The method 800 includes generating a ganged control signal for actuators, each coupled with a corresponding one of various airfoil assemblies of the aerial vehicle, to cause the airfoil assemblies to generate thrust tilted away from a vertical axis of the aerial vehicle and reduce the roll attitude at ACT 820.

In further detail, the data processing system 100 can determine a roll attitude of an aerial vehicle 200 relative to a landing surface (ACT 810). For example, the data processing system 100 can include windspeed, groundspeed, or inertial sensors to determine the roll attitude. The data processing system 100 can determine the roll attitude, or other ACTS (e.g., ACT 820) based a detected proximity between the aerial vehicle 200 and the landing surface. Moreover, the data processing system 100 can transition between a first mode of operation and a second mode of operation based on the detected proximity (e.g., in the second mode of operation, a greater portion of a range of travel for the airfoil assemblies can be apportioned to the ganged control signal, than in the first mode of operation).

The data processing system 100 can generate a ganged control signal to direct thrust tilted away from a vertical axis of the aerial vehicle 200 and reduce the roll attitude (ACT 820). For example, a controller can adjust a ganged control signal for various airfoil assemblies 102 to adjust an orientation of the aerial vehicle 200 to align a lateral axis of a body of the aerial vehicle 200 with a direction of wind, relative to the landing surface. The airfoil assemblies can be located along a lateral axis of the aerial vehicle 200. The lateral axis can extend longer than other axes of the aerial vehicle 200 (e.g., a longitudinal or vertical axis).

The ganged control signal can reduce a roll attitude of the aerial vehicle as referenced to the landing surface (e.g., by using windspeed or other environmental sensors). The method 800 can include limiting the ganged control signal to a maximum tilt which is less than a maximum tilt of the airfoil assemblies 102. The method 800 can include providing a further un-ganged control signal. For example, the method can include aggregating the ganged and ungagged control signal to generate different control signals for different airfoil assemblies 102.

Referring now to FIG. 9, depicted is a block diagram of an example computer system 900. The computer system or computing device 900 can include or be used to implement the data processing system 100, or its components. The computing system 900 includes at least one bus 905 or other communication component for communicating information and at least one processor 910 or processing circuit coupled to the bus 905 for processing information. The computing system 900 can also include one or more processors 910 or processing circuits coupled to the bus 905 for processing information. The computing system 900 also includes at least one main memory 915, such as a random-access memory (RAM) or other dynamic storage device, coupled to the bus 905 for storing information, and instructions to be executed by the processor 910. The computing system 900 can further include at least one read only memory (ROM) 920 or other static storage device coupled to the bus 905 for storing static information and instructions for the processor 910. A storage device 925, such as a solid-state device, magnetic disk, or optical disk, can be coupled to the bus 905 to persistently store information and instructions.

The computing system 900 can be coupled via the bus 905 to a display 935, such as a liquid crystal display, or active-matrix display, for displaying information to a user such as an administrator of the data processing system 100. An input device 930, such as a keyboard or voice interface can be coupled to the bus 905 for communicating information and commands to the processor 910. The input device 930 can include a touch screen display 935. The input device 930 can also include a cursor control, such as a mouse, a trackball, or cursor direction keys, for communicating direction information and command selections to the processor 910 and for controlling cursor movement on the display 935. The display 935 can be part of the display devices 935, or other components of FIG. 9.

The processes, systems, and methods described herein can be implemented by the computing system 900 in response to the processor 910 executing an arrangement of instructions contained in main memory 915. Such instructions can be read into main memory 915 from another computer-readable medium, such as the storage device 925. Execution of the arrangement of instructions contained in main memory 915 causes the computing system 900 to perform the illustrative processes described herein. One or more processors in a multi-processing arrangement can also be employed to execute the instructions contained in main memory 915. Hard-wired circuitry can be used in place of or in combination with software instructions together with the systems and methods described herein. Systems and methods described herein are not limited to any specific combination of hardware circuitry and software.

Although an example computing system has been described in FIG. 9, the subject matter including the operations described in this specification can be implemented in other types of digital electronic circuitry, or in computer software, firmware, or hardware, including the structures disclosed in this specification and their structural equivalents, or in combinations of one or more of them.

Some of the description herein emphasizes the structural independence of the aspects of the system components and illustrates one grouping of operations and responsibilities of these system components. Other groupings that execute similar overall operations are understood to be within the scope of the present application. Modules can be implemented in hardware or as computer instructions on a non-transient computer readable storage medium, and modules can be distributed across various hardware- or computer-based components.

The systems described above can provide multiple ones of any or each of those components, and these components can be provided on either a standalone system or on multiple instantiations in a distributed system. In addition, the systems and methods described above can be provided as one or more computer-readable programs or executable instructions embodied on or in one or more articles of manufacture. The article of manufacture can be cloud storage, a hard disk, a CD-ROM, a flash memory card, a PROM, a RAM, a ROM, or a magnetic tape. In general, the computer-readable programs can be implemented in any programming language, such as LISP, PERL, C, C*++,* C#, PROLOG, or in any byte code language such as JAVA. The software programs or executable instructions can be stored on or in one or more articles of manufacture as object code.

Example and non-limiting module implementation elements include sensors providing any value determined herein, sensors providing any value that is a precursor to a value determined herein, datalink or network hardware including communication chips, oscillating crystals, communication links, cables, twisted pair wiring, coaxial wiring, shielded wiring, transmitters, receivers, or transceivers, logic circuits, hard-wired logic circuits, reconfigurable logic circuits in a particular non-transient state configured according to the module specification, any actuator including at least an electrical, hydraulic, or pneumatic actuator, a solenoid, an op-amp, analog control elements (springs, filters, integrators, adders, dividers, gain elements), or digital control elements.

The subject matter and the operations described in this specification can be implemented in digital electronic circuitry, or in computer software, firmware, or hardware, including the structures disclosed in this specification and their structural equivalents, or in combinations of one or more of them. The subject matter described in this specification can be implemented as one or more computer programs, e.g., one or more circuits of computer program instructions, encoded on one or more computer storage media for execution by, or to control the operation of, data processing apparatuses. Alternatively or in addition, the program instructions can be encoded on an artificially generated propagated signal, e.g., a machine-generated electrical, optical, or electromagnetic signal that is generated to encode information for transmission to a suitable receiver apparatus for execution by a data processing apparatus. A computer storage medium can be, or be included in, a computer-readable storage device, a computer-readable storage substrate, a random or serial access memory array or device, or a combination of one or more of them. While a computer storage medium is not a propagated signal, a computer storage medium can be a source or destination of computer program instructions encoded in an artificially generated propagated signal. The computer storage medium can also be, or be included in, one or more separate components or media (e.g., multiple CDs, disks, or other storage devices include cloud storage). The operations described in this specification can be implemented as operations performed by a data processing apparatus on data stored on one or more computer-readable storage devices or received from other sources.

The terms "computing device," "component," or "data processing apparatus" or the like encompass various apparatuses, devices, and machines for processing data, including by way of example a programmable processor, a computer, a system on a chip, or multiple ones, or combinations of the foregoing. The apparatus can include special purpose logic circuitry, e.g., an FPGA (field programmable gate array), a GPU, or an ASIC (application specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services and/or distributed computing infrastructures.

A computer program (also known as a program, software, software application, app, script, or code) can be written in any form of programming language, including compiled or interpreted languages, declarative or procedural languages, and can be deployed in any form, including as a stand-alone program or as a module, component, subroutine, object, or other unit suitable for use in a computing environment. A computer program can correspond to a file in a file system. A computer program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatuses can also be implemented as, special purpose logic circuitry, e.g., an FPGA (field programmable gate array), a GPU, or an ASIC (application specific integrated circuit). Devices suitable for storing computer program instructions and data can include non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

The subject matter described herein can be implemented in a computing system that includes a back end component, e.g., as a data server, or that includes a middleware component, e.g., an application server, or that includes a front end component, e.g., a client computer having a graphical user interface or a web browser through which a user can interact with an implementation of the subject matter described in this specification, or a combination of one or more such back end, middleware, or front end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

While operations are depicted in the drawings in a particular order, such operations are not required to be performed in the particular order shown or in sequential order, and all illustrated operations are not required to be performed. Actions described herein can be performed in a different order.

Having now described some illustrative implementations, it is apparent that the foregoing is illustrative and not limiting, having been presented by way of example. In particular, although many of the examples presented herein involve specific combinations of method acts or system elements, those acts and those elements can be combined in other ways to accomplish the same objectives. Acts, elements, and features discussed in connection with one implementation are not intended to be excluded from a similar role in other implementations or implementations.

The phraseology and terminology used herein is for the purpose of description and should not be regarded as limiting. The use of "including," "comprising," "having," "containing," "involving," "characterized by," "characterized in that," and variations thereof herein is meant to encompass the items listed thereafter, equivalents thereof, and additional items, as well as alternate implementations consisting of the items listed thereafter exclusively. In one implementation, the systems and methods described herein consist of one, each combination of more than one, or all of the described elements, acts, or components.

Any references to implementations or elements or acts of the systems and methods herein referred to in the singular can also embrace implementations including a plurality of these elements, and any references in plural to any implementation or element or act herein can also embrace implementations including only a single element. References in the singular or plural form are not intended to limit the presently disclosed systems or methods, their components, acts, or elements to single or plural configurations. References to any act or element being based on any information, act or element can include implementations where the act or element is based at least in part on any information, act, or element.

Any implementation disclosed herein can be combined with any other implementation or embodiment, and references to "an implementation," "some implementations," "one implementation" or the like are not necessarily mutually exclusive and are intended to indicate that a particular feature, structure, or characteristic described in connection with the implementation can be included in at least one implementation or embodiment. Such terms as used herein are not necessarily all referring to the same implementation. Any implementation can be combined with any other implementation, inclusively or exclusively, in any manner consistent with the aspects and implementations disclosed herein.

References to "or" can be construed as inclusive so that any terms described using "or" can indicate any of a single, more than one, and all of the described terms. For example, a reference to "at least one of 'A' and 'B'" can include only "A," only "B," as well as both "A" and "B." Such references used in conjunction with "comprising" or other open terminology can include additional items.

Where technical features in the drawings, detailed description or any claims are followed by reference signs, the reference signs have been included to increase the intelligibility of the drawings, detailed description, and claims. Accordingly, neither the reference signs nor their absence have any limiting effect on the scope of any claim elements.

Modifications of described elements and acts such as variations in sizes, dimensions, structures, shapes and proportions of the various elements, values of parameters, mounting arrangements, use of materials, colors, and orientations can occur without materially departing from the teachings and advantages of the subject matter disclosed herein. For example, elements shown as integrally formed can be constructed of multiple parts or elements, the position of elements can be reversed or otherwise varied, and the nature or number of discrete elements or positions can be altered or varied. Other substitutions, modifications, changes and omissions can also be made in the design, operating conditions and arrangement of the disclosed elements and operations without departing from the scope of the present disclosure.

The systems and methods described herein can be embodied in other specific forms without departing from the characteristics thereof. Scope of the systems and methods described herein is thus indicated by the appended claims, rather than the foregoing description, and changes that come within the meaning and range of equivalency of the claims are embraced therein.

While this specification contains many specific implementation details, these should not be construed as limitations on the scope of any inventions or of what can be claimed, but rather as descriptions of features specific to particular embodiments of particular aspects. Certain features described in this specification in the context of separate embodiments can also be implemented in combination in a single embodiment. Conversely, various features described in the context of a single embodiment can also be implemented in multiple embodiments separately or in any suitable sub combination. Moreover, although features can be described above as acting in certain combinations and even initially claimed as such, one or more features from a claimed combination can in some cases be excised from the combination, and the claimed combination can be directed to a sub combination or variation of a sub combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing can be advantageous. Moreover, the separation of various system components in the embodiments described above should not be understood as requiring such separation in all embodiments, and it should be understood that the described program components and systems can generally be integrated in a single software product or packaged into multiple software products.

Thus, particular embodiments of the subject matter have been described. In some cases, the actions recited in the claims can be performed in a different order and still achieve desirable results. In addition, the processes depicted in the accompanying figures do not necessarily require the particular order shown, or sequential order, to achieve desirable results.

## Claims

1. An aerial vehicle, comprising:
a plurality of airfoil assemblies;
a plurality of actuators, each coupled with a corresponding one of the plurality of airfoil assemblies, configured to tilt a thrust generated by each of the plurality of airfoil assemblies away from a vertical axis of the aerial vehicle; and
one or more processors, coupled with memory, to:
determine a roll attitude of the aerial vehicle relative to a landing surface; and
generate a ganged control signal, for each of the plurality of airfoil assemblies, to cause the corresponding actuator of the plurality of actuators to tilt the airfoil assemblies away from the vertical axis to reduce the roll attitude of the aerial vehicle.

2. The aerial vehicle of claim 1, wherein the plurality of airfoil assemblies are each located along a lateral axis of the aerial vehicle, wherein the aerial vehicle extends a lateral distance along the lateral axis, greater than a vertical distance along the vertical axis, particularly wherein the one or more processors are configured to:
adjust an orientation of the aerial vehicle to align the lateral axis of a body of the aerial vehicle with a direction of wind, relative to the landing surface.

3. The aerial vehicle of claim 1 or 2, wherein the one or more processors are configured to:
determine a relative motion between an environment and the landing surface; and
reduce the roll attitude of the aerial vehicle as referenced to the relative motion of the landing surface.

4. The aerial vehicle of one of claims 1-3, wherein:
a body of the aerial vehicle extends laterally beyond ground contact points; and
the one or more processors are configured to limit a lateral displacement of the body to less than:
a ground strike angle of the body; and
a ground contact angle for the ground contact points.

5. The aerial vehicle of one of claims 1-4, wherein the one or more processors are configured to:
limit the ganged control signal to a maximum tilt which less than a maximum tilt of the plurality of actuators;
provide an un-ganged control signal, for a first of the plurality of airfoil assemblies, to cause the corresponding actuator to tilt the first of the plurality of airfoil assemblies; and
actuate the actuator corresponding to the first of the plurality of airfoil assemblies according to an aggregation of the ganged control signal and the un-ganged control signal.

6. A method, comprising:
determining, by a controller, a roll attitude of an aerial vehicle relative to a landing surface; and
generating, by the controller, a ganged control signal for a plurality of actuators, each coupled with a corresponding one of a plurality of airfoil assemblies of the aerial vehicle, to cause the airfoil assemblies to generate thrust tilted away from a vertical axis of the aerial vehicle and reduce the roll attitude of the aerial vehicle.

7. The method of claim 6, further comprising:
adjusting, by the controller, an orientation of the aerial vehicle to align a lateral axis of a body of the aerial vehicle with a direction of wind, relative to the landing surface, wherein:
the plurality of airfoil assemblies are each located along the lateral axis of the aerial vehicle; and
the aerial vehicle extends a lateral distance along the lateral axis, greater than a distance along a longitudinal axis and a vertical distance along the vertical axis.

8. The method of claim 6 or 7, or the aerial vehicle of one of claims 1 to 5, further comprising:
detecting, by the controller or the one or more processors, respectively, a proximity between the aerial vehicle and the landing surface; and
transitioning, by the controller or the one or more processors, respectively, between a first mode of operation and a second mode of operation based on the detected proximity, wherein in the second mode of operation, a greater portion of a range of travel for the plurality of actuators coupled with the plurality of airfoil assemblies is apportioned to the ganged control signal, than in the first mode of operation.

9. The method of one of claims 6-8, further comprising:
determining, by the controller, a relative motion between an environment and the landing surface; and
reducing, by the controller, the roll attitude of the aerial vehicle as referenced to the landing surface using environmental sensors.

10. The method of one of claims 6-9, wherein:
a body of the aerial vehicle comprises a flying wing extending laterally beyond landing gear; and
the controller is configured to limit a lateral displacement of the body to less than:
a ground strike angle for wingtips of the flying wing; and
a ground contact angle for the landing gear.

11. The method of one of claims 6-10, or the aerial vehicle of one of claims 1 to 5, wherein the plurality of airfoil assemblies consist of:
a first airfoil assembly disposed laterally beyond a first ground contact point in a first lateral direction, relative to a lateral center of the aerial vehicle; and
a second airfoil assembly disposed laterally beyond a second ground contact point in a second lateral direction opposite from the first lateral direction, relative to the lateral center of the aerial vehicle.

12. The method of one of claims 6-11, further comprising:
limiting, by the controller, the ganged control signal to a maximum tilt which less than a maximum tilt of the plurality of airfoil assemblies;
providing, by the controller, an un-ganged control signal for a first of the plurality of airfoil assemblies to tilt the first of the plurality of airfoil assemblies; and
aggregating, by the controller, the ganged control signal and the un-ganged control signal to generate a first control signal for a first airfoil assembly and a second control signal, different from the first control signal, for the first airfoil assembly.

13. A system, comprising:
a controller configured to:
determine a roll attitude and position of an aerial vehicle relative to a landing surface; and
generate, based on the roll attitude and the position, a ganged control signal for each of a plurality of airfoil assemblies of the aerial vehicle disposed along a lateral axis of the aerial vehicle, wherein the ganged control signal is configured to cause the plurality of airfoil assemblies to generate thrust tilted away from a vertical axis of the aerial vehicle and reduce the roll attitude of the aerial vehicle.

14. The system of claim 13, further comprising the controller to:
generate un-ganged control signals for each of the plurality of airfoil assemblies, wherein the un-ganged control signals are configured to:
reposition the aerial vehicle relative to the landing surface; and
adjust an attitude of the aerial vehicle relative to the landing surface, particularly wherein:
the repositioning of the aerial vehicle is configured to land the aerial vehicle on the landing surface; and
the adjusted attitude is configured to align the lateral axis of the aerial vehicle with a windspeed direction.

15. The system of claim 14, wherein the controller is configured to generate the ganged control signal responsive to:
a detected proximity to the landing surface; and
a comparison between a windspeed to a windspeed threshold,
and/or wherein the system is configured to generate the ganged control signal while landed to prevent tipping of the aerial vehicle without taking off.
